Europäisches Patentamt

European Patent Office

Office européen des brevets

(19)

(11) Veröffentlichungsnummer : **0 065 222**
**B1**

(12) **EUROPÄISCHE PATENTSCHRIFT**

(45) Veröffentlichungstag der Patentschrift :
03.04.85

(21) Anmeldenummer : 82103899.9

(22) Anmeldetag : 05.05.82

(51) Int. Cl.⁴ : **C 12 C 9/02,** A 23 L 1/221

(54) **Verfahren zum Trocknen von durch Hochdruckextraktion hergestellten Naturstoffextrakten aus Pflanzen und Pflanzenteilen.**

(30) Priorität : 07.05.81 DE 3118160

(43) Veröffentlichungstag der Anmeldung :
24.11.82 Patentblatt 82/47

(45) Bekanntmachung des Hinweises auf die Patenterteilung : 03.04.85 Patentblatt 85/14

(84) Benannte Vertragsstaaten :
BE CH DE FR GB LI NL

(56) Entgegenhaltungen :
DE-A- 2 107 201
DE-A- 2 142 205
DE-A- 2 627 534
DE-A- 2 827 002
DE-A- 2 844 781
DE-B- 2 127 618
FR-E- 72 495
US-A- 3 477 856
US-A- 4 198 432

(73) Patentinhaber : SKW Trostberg Aktiengesellschaft
Dr.-Albert-Frank-Strasse 32 Postfach 1150/1160
D-8223 Trostberg (DE)

(72) Erfinder : Vollbrecht, Heinz-Rüdiger, Dr.
Herzog-Nikolaus-Strasse 15
D-8221 Stein/Traun (DE)
Erfinder : Schütz, Erwin, Dr.
Steiner Strasse 22
D-8221 Pailling (DE)
Erfinder : Sandner, Klaus
Gabelsbergerstrasse 1
D-8223 Trostberg (DE)

(74) Vertreter : Weickmann, Heinrich, Dipl.-Ing. et al
Patentanwälte Dipl.-Ing. H.Weickmann Dipl.-Phys.Dr.
K.Fincke Dipl.-Ing. F.A.Weickmann Dipl.-Chem. B.
Huber Dr.-Ing. H. Liska Dipl.-Phys.Dr. J. Prechtel
Postfach 860820
D-8000 München 86 (DE)

EP 0 065 222 B1

## Beschreibung

Die Erfindung betrifft ein Verfahren zum Trocknen von durch Hochdruckextraktion mit verflüssigten Gasen oder Gasen in überkritischem Zustand erhaltenen Naturstoffextrakten aus Pflanzen und Pflanzenteilen.

Es ist bekannt, daß die Lagerstabilität und die Anwendungseigenschaften, wie das Löslichkeitsverhalten und die Dosierbarkeit von Naturstoffextrakten umso besser sind, je geringer der Wassergehalt der Naturstoffextrakte ist (DE-OS 26 27 534).

Bei den bekannten Extraktionsverfahren (festflüssig oder flüssig-flüssig) hat man versucht, den Wassergehalt dadurch niedrig zu halten, daß man ein Extraktionsmittel verwendet, das sich nicht mit Wasser mischt, wie zum Beispiel einen Kohlenwasserstoff. Diese Verfahrensweise ist jedoch nur auf Naturstoffe in vorgetrocknetem Zustand anwendbar. Diese Extraktionsmethode kann nicht auf Pflanzen oder Pflanzenteile mit höherem Wassergehalt angewandt werden, da die Benetzbarkeit der pflanzlichen Materialien mit dem mit Wasser nicht mischbaren organischen Extraktionsmittel und somit die Extraktion sämtlicher Inhaltsstoffe nicht gewährleistet ist.

Andererseits wurden zur Verringerung des Wassergehalts der gewonnenen Naturstoffextrakte auch Extraktionsmittel eingesetzt, die sich mit Wasser mischen, wie beispielsweise Alkohole. Dies hat jedoch zur Folge, daß die erhaltenen Lösungen der Naturstoffextrakte so hoch erhitzt werden müssen, daß sowohl das Lösungsmittel als auch das Wasser verdampfen. Diese Methode besitzt jedoch wegen der hohen thermischen Belastung der Naturstoffextrakte und wegen des Verdampfens einzelner erwünschter Komponenten erhebliche Nachteile. Darüberhinaus muß in einem Folgeschritt das anfallende Wasser-Lösungsmittel-Gemisch wieder getrennt werden.

In jüngster Zeit sind eine Reihe von Verfahren bekannt geworden, bei denen die Extraktion von Naturstoffen mit verflüssigten Gasen oder mit Gasen in überkritischem Zustand erfolgt (DE-OS 21 07 201, DE-PS 21 27 618, DE-PS 21 42 205, DE-AS 28 27 002, DE-AS 28 44 781 und DE-OS 29 05 078). Die Vorteile dieser Extraktionstechnik sind die physiologische Unbedenklichkeit der Extraktionsmittel, wozu meistens Kohlendioxid verwendet wird, sowie die außerordentlich schonende Behandlung sowohl des Extraktes als auch des Extraktionsgutes und die Vollständigkeit der Extraktion, da auch die leichtflüchtigen Bestandteile, insbesondere die Aromastoffe, im Extrakt zurückbleiben.

Als nachteilig hat sich bei dieser Verfahrensweise der verhältnismäßig hohe Wassergehalt der gebildeten Naturstoffextrakte erwiesen, vor allem bei der Extraktion von frischen Pflanzen oder Pflanzenteilen. Es ist daher bislang eine aufwendige Nachbehandlung der Extrakte erforderlich geworden, wenn man nicht einen entscheidenden Vorteil dieser Methoden aufgeben will, nämlich die thermisch schonende Behandlung der Extrakte.

Die Aufgabe der vorliegenden Erfindung besteht nun darin, ein Verfahren anzugeben, mit dem es gelingt, die durch Hochdruckextraktion mit verflüssigten Gasen oder Gasen in überkritischem Zustand erhaltenen Naturstoffextrakte in einfacher und schonender Weise zu trocknen, ohne daß dabei Verluste an erwünschten Bestandteilen, namentlich flüchtigen Bestandteilen, wie Aromastoffen, auftreten.

Diese Aufgabe wird gelöst durch die kennzeichnenden Maßnahmen des Verfahrens gemäß Hauptanspruch. Die Unteransprüche betreffen besonders bevorzugte Ausführungsformen dieses Erfindungsgegenstandes.

Die erfindungsgemäße Verfahrensweise der eingangs genannten Gattung ist dadurch gekennzeichnet, daß man den mit dem Extrakt beladenen Gasstrom mit einem pulverförmigen oder körnigen, festen Trockenmittel behandelt. Die Behandlung kann dabei so erfolgen, daß man diesen Gasstrom über und/oder durch eine Schicht aus dem Trockenmittel führt, das vorzugsweise eine solche Teilchengröße besitzt, daß die Gasströmung nicht beeinträchtigt wird und bei hoher Trocknungswirkung keine feinteiligen Anteile des Trockenmittels mitgerissen werden.

Überraschenderweise hat sich gezeigt, daß bei Verwendung von Calciumsulfat als Trockenmittel praktisch keine Adsorption irgendwelcher Bestandteile des Naturstoffextraktes festzustellen ist und daß ausschließlich Wasser absorbiert wird. Hierdurch werden nicht nur Verluste wichtiger Substanzanteile ausgeschlossen, die unter Umständen eine unerwünschte Geschmacksveränderung hervorrufen können, wenn wesentliche Aromastoffe beseitigt werden, sondern es wird auch eine einfache Regenerierung des mit Wasser gesättigten Calciumsulfats ermöglicht, da die Oberfläche dieses erfindungsgemäß bevorzugten Trockenmittels nicht durch Extraktstoffe belegt und eventuell unwirksam wird. Darüberhinaus kann die Abluft aus den Trocknern, da sie außer Wasser keine Fremdstoffe aufgenommen hat, ohne weitere Reinigung in die Atmosphäre abgeleitet werden.

Die erfindungsgemäße Verfahrensweise stellt eine wesentliche Vereinfachung der Herstellung von Naturstoffextrakten mit niedrigem Wassergehalt dar, da nicht nur mit vorgetrockneten Naturstoffen sondern auch mit frischen Pflanzen oder Pflanzenteilen mit relativ hohem Wassergehalt und ohne aufwendige Nachbehandlung Hochdruckextraktionen mit verflüssigten Gasen oder mit Gasen in überkritischem Zustand durchgeführt werden können.

Nach der erfindungsgemäßen Verfahrensweise werden die zu extrahierenden Pflanzenteile, wie beispielsweise Hopfenpellets oder frischer, gemahlener Hopfen, Kamille, Dill, Petersilie, Estragon und dergleichen mit vorzugsweise Kohlendioxid bei überkritischem Druck extrahiert, wonach das mit den extrahierten Stoffen beladene Gas durch das Trocknungsmittel, vorzugsweise Calciumsulfat, geleitet wird. Das eingesetzte Calciumsulfat vermag hierbei bis zu 6 % seines Eigengewichts an Wasser aufzunehmen. Anschließend erfolgt eine Druckminderung und die Abscheidung des Extraktes. Sobald das Calciumsulfat mit Wasser gesättigt ist, wird es mit heißer Luft mit einer Temperatur von 100 bis 300 °C, vorzugsweise etwa 170 °C, wieder auf sein Ausgangsgewicht regeneriert und kann erneut als Trockenmittel bei dem erfindungsgemäßen Verfahren eingesetzt werden. Die aus den Trocknern austretende Abluft bedarf vor ihrer Emission in die Atmosphäre keiner weiteren Nachbehandlung.

Gemäß einer bevorzugten Ausführungsform der Erfindung bewirkt man die Trocknung mit Hilfe von 2 im Gasstrom angeordneten Trocknern, die alternativ betrieben werden, wobei der eine Trockner zur Trocknung dient, während in dem anderen Trockner das Trocknungsmittel regeneriert wird, vorzugsweise durch Behandlung mit heißer Luft mit einer Temperatur von 10 bis 300 °C und vorzugsweise von etwa 170 °C. Die folgenden Beispiele dienen der weiteren Erläuterung der Erfindung.

Beispiel 1 (Vergleichsbeispiel)

Man extrahiert 700 g Hopfenpellets mit einem Wassergehalt von 8,1 % während 6 Stunden mit Kohlendioxid bei 160 bar und 31 °C. Man erhält nach dem Abscheiden des Extrakts bei 43 bar und 22 °C 135,0 g eines Extrakts mit einem Wassergehalt von 20,6 %.

Beispiel 2

Man extrahiert 550 g Hopfenpellets mit einem Wassergehalt von 9,7 % während 6 Stunden mit Kohlendioxid bei 160 bar und 31 °C. Das mit den extrahierten Stoffen beladene Gas wird durch eine Schüttung von 800 g Calciumsulfat geleitet, wonach der Extrakt bei 44 bar und 22 °C abgeschieden wird. Man erhält 90,0 g eines Extrakts mit einem Wassergehalt von lediglich 5,6 %.

Beispiel 3 (Vergleichsbeispiel)

Man extrahiert 350 g frischen, gemahlenen Hopfen mit einem Wassergehalt von 78 % während 2 Stunden mit Kohlendioxid bei 160 bar und 315 °C. Nach dem Abscheiden des Extrakts bei 45 bar und 25 °C erhält man 19,4 eines Extrakts mit einem Wassergehalt von 32,0 %.

Beispiel 4

Man extrahiert 250 g frischen, gemahlenen Hopfen mit einem Wassergehalt von 78 % während 2 Stunden mit Kohlendioxid bei 160 bar und 31 °C. Das mit den Extraktstoffen beladene Gas wird durch eine Schüttung von 800 g Calciumsulfat geleitet, wonach man den Extrakt bei 40 bar und 21 °C abscheidet. Man erhält 9,6 g eines Extrakts mit einem Wassergehalt von lediglich 6,2 %.

Beispiel 5 (Vergleichsbeispiel)

Man extrahiert 500 g frische Kamillenblüten während 2 Stunden mit Kohlendioxid bei 160 bar und 31 °C. Man erhält 5,9 g eines Extrakts mit einem Wassergehalt von 74 %.

Beispiel 6

Man extrahiert 400 g frische Kamillenblüten während 2 Stunden mit Kohlendioxid bei 160 bar und 31 °C. Das mit den extrahierten Stoffen beladene Gas wird durch eine Calciumsulfat-Schüttung geleitet. Man erhält 1,7 g eines Extrakts mit einem Wassergehalt von lediglich 7 %.

**Ansprüche**

1. Verfahren zum Trocknen von durch Hochdruckextraktion mit verflüssigten Gasen oder Gasen in überkritischem Zustand erhaltenen Naturstoffextrakten aus Pflanzen und Pflanzenteilen, dadurch gekennzeichnet, daß man den mit dem Extrakt beladenen Gasstrom mit pulverförmigem oder körnigem, festem Calziumsulfat als Trockenmittel behandelt.

2. Verfahren nach Anspruch 1, dadurch gekennzeichnet, daß man den mit dem Extrakt beladenen Gasstrom über und/oder durch das Trockenmittel führt.

3. Verfahren nach Anspruch 1 oder 2 dadurch gekennzeichnet, daß man durch Behandlung mit heißer Luft mit einer Temperatur von 100 bis 300 °C, vorzugsweise etwa 170 °C regeneriertes Calciumsulfat verwendet.

4. Verfahren nach den Ansprüchen 1 bis 3, dadurch gekennzeichnet, daß man die Trocknung mit Hilfe von zwei im Gasstrom angeordneten Trocknern bewirkt, die alternativ betrieben werden, wobei der eine zur Trocknung dient, während in dem anderen Trockner das Trocknungsmittel durch Behandlung mit heißer Luft mit einer Temperatur von 100 bis 300 °C, vorzugsweise etwa 170 °C regeneriert wird.

**Claims**

1. Process for the drying of natural product extracts from plants and parts of plants obtained by high pressure extraction with liquefied gases or gases in supercritical state, characterised in that one treats the gas stream loaded with the extract with powdered or granular, solid calcium sulphate as drying agent.

2. Process according to claim 1, characterised in that one passes the gas stream loaded with the extract over and/or through the drying agent.

3. Process according to claim 1 or 2, characterised in that one uses calcium sulphate regenerated by treatment with hot air with a temperature of 100 to 300 °C, preferably of about 170 °C.

4. Process according to claims 1 to 3, characterised in that one brings about the drying with the help of two driers arranged in the gas stream, which are operated alternatingly, whereby one serves for the drying, whereas in the other drier the drying agent is regenerated by treatment with hot air with a temperature of 100 to 300 °C, preferably of about 170 °C.

**Revendications**

1. Procédé de séchage d'extraits de produits naturels de plantes ou de parties de plantes par extraction à haute pression avec des gaz liquéfiés ou des gaz dans l'état hypercritique, caractérisé en ce qu'on traite le courant de gaz chargé d'extrait avec du sulfate de calcium solide, pulvérulent ou granulaire comme desséchant.

2. Procédé suivant la revendication 1, caractérisé en ce qu'on envoie le courant de gaz chargé avec l'extrait sur et/ou à travers le desséchant.

3. Procédé suivant les revendications 1 ou 2, caractérisé en ce qu'on utilise un sulfate de calcium régénéré par traitement avec de l'air chaud à une température de 100 à 300 °C, de préférence d'environ 170 °C.

4. Procédé suivant les revendications 1 à 3, caractérisé en ce qu'on effectue le séchage à l'aide de deux séchoirs disposés dans le courant de gaz, que l'on fait fonctionner alternativement, l'un servant au séchage tandis que dans l'autre séchoir, le desséchant est régénéré par traitement avec de l'air chaud à une température de 100 à 300 °C, de préférence d'environ 170 °C.